# EUROPÄISCHE PATENTSCHRIFT

(11) **EP 3 019 836 B1**
(45) Veröffentlichungstag und Bekanntmachung des Hinweises auf die Patenterteilung: **03.03.2021**
(21) Anmeldenummer: 14730112.1
(22) Anmeldetag: 04.06.2014
(51) Int. Cl.: G01F 1/60

(54) **VORRICHTUNG UND VERFAHREN ZUR MAGNETISCH-INDUKTIVEN DURCHFLUSSMESSUNG**
DEVICE AND METHOD FOR MAGNETIC INDUCTIVE FLOW MEASUREMENT
DISPOSITIF ET PROCÉDÉ DE MESURE DE DÉBIT MAGNÉTO-INDUCTIVE

(30) Priorität: 06.06.2013 DE 102013105832
(43) Veröffentlichungstag der Anmeldung: 18.05.2016
(73) Patentinhaber: EICON GmbH, 85646 Neufarn/Vaterstetten (DE)
(72) Erfinder: WOLFF, Marcus, 22149 Hamburg (DE); BUHNS, Henry, 21218 Seevetal (DE)
(74) Vertreter: Stellbrink & Partner Patentanwälte mbB
(86) Internationale Anmeldenummer: PCT/EP2014/061534
(87) Internationale Veröffentlichungsnummer: WO 2014/195338

(56) Entgegenhaltungen:
- DE-A1-102006 023 916
- JP-A- H 085 422
- US-A- 3 530 713
- US-A- 4 357 835
- US-B1- 6 431 011
- US-B1- 6 463 807
- US-B1- 6 571 642

## Beschreibung

Die Erfindung betrifft eine Vorrichtung zur Messung einer Fließgeschwindigkeit eines elektrisch leitfähigen Mediums in einem von einem Magnetfeld durchsetzten Volumen nach Anspruch 1 sowie ein entsprechendes Verfahren nach Anspruch 8.

Das Messprinzip von magnetisch-induktiven Durchfluss-Messvorrichtungen beruht auf dem Gesetz der elektromagnetischen Induktion (Faraday'sches Gesetz). Die strömende Flüssigkeit in einem Rohr bildet dabei einen bewegten elektrischen Leiter (was eine, zumindest geringe, Leitfähigkeit der Flüssigkeit voraussetzt). Wenn die Flüssigkeit durch ein Magnetfeld fließt, kann über zwei Elektroden, die senkrecht zum Magnetfeld angeordnet sind, eine elektrische Spannung gemessen werden, deren Betrag proportional zur Fließgeschwindigkeit der Flüssigkeit ist.

Grundsätzlich ist eine Messspannung mit Störspannungen überlagert. Ein Anteil der Störspannungen ist auf elektromagnetische Strahlung aus der Umgebung zurückzuführen. Dieser Anteil kann mittels geeigneter Abschirmung der Messanordnung verringert werden. Ein weiterer Störspannungsanteil wird von elektrochemischen Vorgängen an der Grenzschicht zwischen den Messelektroden und der Flüssigkeit erzeugt. An der Grenzschicht der Elektroden zur Flüssigkeit kommt es zu Redox-Reaktionen, bei denen Elektronen zwischen Elektroden und Flüssigkeit ausgetauscht werden. Auch wenn beide Elektroden aus demselben Werkstoff bestehen und damit identische Reaktionen ablaufen, befinden sie sich in der Praxis nicht im chemischen Gleichgewicht. Daher kommt es zu unterschiedlichen elektrischen Potentialen und damit zu einer Spannung zwischen den Elektroden. Ursachen sind beispielsweise die ungleiche Anzahl der Atome an den Grenzschichten (beispielsweise durch Unterschiede bezüglich der chemischen Reinheit oder aufgrund geometrischer Unterschiede), inhomogene Verunreinigungen der Flüssigkeit oder Anlagerungen an den Elektroden. Der Betrag der Spannung ändert sich kontinuierlich. Grund für diese Änderungen können beispielsweise Diffusion, Konvektion, Dissoziation, Ionisation und Reibung sein. Sobald die Flüssigkeit in Bewegung kommt, variiert eine Gleichspannung kontinuierlich, da sich die Ladungsverteilung innerhalb der Flüssigkeit infolge von Strömungen und Turbulenzen verändert. Gleichzeitig tritt als Folge der magnetischen Induktion eine Spannung an den Elektroden auf. Diese Spannung ist üblicherweise das eigentliche Messsignal. Wenn eine Spannung an ein Elektrodenpaar angelegt wird, kommt es zur Elektrolyse und damit zu einem von außen aufgezwungenen Austausch von Elektronen, der der elektrochemischen Spannung überlagert ist. Diese Effekte führen zu einer (unbestimmt) triftenden Gleitspannung, die als Offset dem eigentlichen Messsignal überlagert ist.

Aus der US 6,463,807 B1 ist ein Verfahren zur magnetisch-induktiven Durchflussmessung bekannt, wobei ein Magnetfeld durch einen Permanent-Magneten bereitgestellt wird. Ein Schalter ist vorgesehen, um Elektroden, die in Kontakt mit dem zu messenden Medium stehen, periodisch kurzuschließen.

Eine Eliminierung der Offset-Spannung ist möglich, indem die Elektroden zum Ladungsausgleich kurzgeschlossen werden. Das magnetisch-induzierte Nutzsignal wird üblicherweise gemessen, wenn der Kurzschluss aufgehoben wird. Unmittelbar nach Unterbrechung des Kurzschlusses stellt sich aber auch das elektrochemische Störsignal wieder ein. Im Ergebnis bedeutet dies eine verringerte Genauigkeit der Messung.

Es ist Aufgabe der Erfindung, eine Messvorrichtung und ein entsprechendes Verfahren vorzuschlagen, wobei ein zufriedenstellender Kompromiss erreicht werden soll zwischen einer vergleichsweise hohen Messgeschwindigkeit einerseits und einer vergleichsweise guten Reduktion von Störspannungen (insbesondere elektrochemischen Störspannungen) andererseits.

Diese Aufgabe wird durch den Gegenstand gemäß Anspruch 1 gelöst.

Ein Kerngedanke der Erfindung besteht darin, dass zwischen den Elektroden eine (permanente) elektrische Verbindung über einen Widerstand realisiert wird. Dadurch kann kontinuierlich ein Ladungsausgleich stattfinden, so dass einerseits eine vergleichsweise hohe Messgeschwindigkeit ermöglicht wird und andererseits Störspannungen, insbesondere elektrochemische Störspannungen, reduziert sind.

Das Medium wird vorzugsweise in einer entsprechenden Leitung geführt, insbesondere einem Rohr. Eine derartige Leitung, insbesondere ein derartiges Rohr, kann Bestandteil der Messvorrichtung sein.

In einer konkreten Ausführungsform sind die zumindest zwei Elektroden in direktem Kontakt mit dem fließenden Medium.

Erfindungsgemäss umfasst die Messvorrichtung mindestens einen Permanentmagneten zur Erzeugung des Magnetfelds. Dadurch lässt sich die Messgenauigkeit weiter verbessern.

Der (mindestens eine) Widerstand weist vorzugsweise einen Wert von 10 bis 200 kOhm, vorzugsweise 40 bis 60 kOhm, weiter vorzugsweise 50 kOhm auf. Bei einem derartigen Widerstand wird ein besonders guter Kompromiss zwischen einer vergleichsweise hohen Messgeschwindigkeit und einer vergleichsweise hohen Messgenauigkeit erreicht.

Gemäss der Erfindung ist ein Schalter vorgesehen zur Bereitstellung einer zweiten elektrischen Verbindung (neben dem elektrischen Widerstand) zum Kurzschluss der zumindest zwei Elektroden, wobei die zweite elektrische Verbindung zusätzlich und parallel zur ersten elektrischen Verbindung (des mindestens einen elektrischen Widerstands) ausgebildet ist. Der Schalter weist vorzugsweise im geöffneten Zustand einen Widerstand von mindestens 10 GOhm, weiter vorzugsweise mindestens 100 GOhm auf. Außerdem kann der Schalter im geschlossenen Zustand einen Widerstand von höchstens 1 Ohm, vorzugsweise höchstens 0,1 Ohm und weiter vorzugsweise höchstens 10 mOhm aufweisen. Durch eine Kombination des Schalters mit dem (mindestens einen) elektrischen Widerstand wird eine besonders hohe Messgenauigkeit erreicht.

In einer konkreten Ausführungsform umfasst die Auswerteeinheit der Messvorrichtung einen Timer zur Steuerung von Offen- und Kurzschlusszeiten des Schalters. Vorzugsweise ist der Timer derart ausgebildet, dass er den Schalter für einen ersten Zeitraum kurzschließt und dann für einen zweiten Zeitraum zum Messen öffnet. Der erste Zeitraum zum Kurzschließen kann 70 bis 200 ms, vorzugsweise 60 bis 100 ms, weiter vorzugsweise 80 ms umfassen. Der zweite Zeitraum kann vorzugsweise 1 bis 40 ms, weiter vorzugsweise 10 bis 30 ms, noch weiter vorzugsweise 20 ms umfassen. Dadurch wird ein besonders guter Kompromiss erreicht, der einerseits eine hohe Messgeschwindigkeit gestattet und andererseits insbesondere die elektrischen Störspannungen in hohem Maße reduziert.

Die Messvorrichtung kann gemäß einer konkreten Ausführungsform eine Aufnahmeeinrichtung aufweisen, die den zeitlichen Verlauf des Messsignals aufzeichnet. Die Bestimmung der Fließgeschwindigkeit durch die Auswerteeinheit kann darauf basieren, dass sich die zeitlichen Verläufe der vom Durchfluss induzierten Spannung und elektrochemischen Störspannung unterscheiden. Die Auswerteeinheit kann eine geeignete Messschaltung umfassen, bevorzugt eine getriggerte Sample- and Hold-Schaltung, die vorzugsweise selektiv den Anteil der vom Durchfluss induzierten Spannung erfasst. Nachdem der Kurzschluss zwischen den Elektroden durch Öffnen des Schalters wieder aufgehoben wurde, dauert es einige Zeit, bis sich die magnetisch induzierte Nutzspannung und die elektrochemische Störspannung wieder vollständig eingestellt haben. Die Zeit für die elektrochemischen Vorgänge ist dabei im Wesentlichen von der Reaktionskinetik an den Elektroden abhängig. Insbesondere wenn signifikante Unterschiede im dynamischen Verhalten zwischen beiden Vorgängen vorliegen (beispielsweise, wenn sich eine Spannung schneller abbaut als die andere), kann mithilfe einer geeigneten Messschaltung (beispielsweise einer getriggerten Sample-and-Hold-Schaltung) nur der Anteil der induzierten Spannung gemessen werden. Dadurch wird die Messgenauigkeit weiter verbessert.

Eine das Medium leitende Leitung (beispielsweise ein Rohr) kann geerdet werden. Durch eine Erdung der Leitung (des Rohrs) wird bewusst verhindert, dass die Leitung (Rohrleitung) als Antenne wirkt. Durch Strahlung hervorgerufene Störspannungen können (aufgrund ausreichender Abschirmung des gesamten Messsystems) reduziert werden.

Vorzugsweise umfasst die Messvorrichtung eine Batterie zur Bereitstellung einer Betriebsspannung. Durch eine derartige Batterie kann eine (störspannungsbehaftete) Versorgungsspannung ggf. vollständig entfallen. Dadurch wird die Messgenauigkeit weiter verbessert. Die Betriebsspannung dient der Versorgung insbesondere der Messelektronik bzw. Auswerteeinheit.

Die Elektroden können zumindest abschnittsweise und/oder zumindest anteilig aus einem inerten Material, vorzugsweise Gold oder Platin, gefertigt sein oder mit einem inerten Material, vorzugsweise Gold oder Platin, beschichtet sein. Die Elektroden können zumindest abschnittsweise und/oder anteilig aus einem elektrisch leitenden Polymer gefertigt sein. Weiterhin können die Elektroden zumindest abschnittsweise und/oder zumindest anteilig aus einer elektrisch leitenden Keramik gefertigt sein. Weiterhin können die Elektroden zumindest abschnittsweise und/oder zumindest anteilig aus Kohlenstoffnanoröhren gefertigt sein. Inerte Elektrodenmaterialien (wie Gold oder Platin) sind auch elektrochemisch reaktionsarm. Ihre Verwendung reduziert daher weiter den elektrochemischen Offset. Bevorzugt ist ein möglichst kleines Elektrodenpotential/Redoxpotential (Standardpotential). Elektrisch leitende Polymere und Keramiken weisen ähnliche Vorteile auf. Auch Kohlenstoffnanoröhren sind aufgrund ihrer Struktur in der Lage, poröse, elektrisch leitfähige und mechanisch stabile Netzwerke zu bilden. Insgesamt werden die elektrochemische Stabilität und dadurch die Messgenauigkeit weiter verbessert.

Alternativ wird die oben genannte Aufgabe durch ein Messverfahren nach Anspruch 8 gelöst.

Vorzugsweise sind die zumindest zwei Elektroden im direkten Kontakt mit dem elektrisch leitfähigen Medium. Das Magnetfeld wird von Permanent-magneten erzeugt. Die zumindest zwei Elektroden sind zusätzlich und parallel zur permanenten Widerstandsverbindung mit einem Schalter verbunden, der dazu ausgebildet ist, die Elektroden kurzzuschließen. Der Schalter kann im geöffneten Zustand einen Widerstand von zumindest 10 GOhm aufweisen. Weiterhin kann der Schalter vorzugsweise im eingeschalteten Zustand einen Widerstand von höchstens 1 Ohm, vorzugsweise höchstens 0,1 Ohm, besonders bevorzugt höchstens 10 mOhm aufweisen.

Die Offen- und Kurzschlusszeiten des Schalters können gesteuert werden. Vorzugsweise wird der Schalter für einen ersten Zeitraum kurzgeschlossen und dann für einen zweiten Zeitraum zum Messen geöffnet. Weiter vorzugsweise ist der erste Zeitraum 40 bis 200 ms, vorzugsweise 60 bis 100 ms, weiter vorzugsweise 80 ms. Der zweite Zeitraum ist vorzugsweise 1 bis 40 ms, weiter vorzugsweise 10 bis 30 ms, noch weiter vorzugsweise 20 ms.

Der zeitliche Verlauf des Messsignals wird in einer bevorzugten Ausführungsform aufgezeichnet. Die Bestimmung der Fließgeschwindigkeit kann darauf basieren, dass sich die zeitliche Verläufe der vom Durchfluss induzierten Spannung und der elektrochemischen Steuerspannung unterscheiden.

Eine das Medium leitende Leitung (beispielsweise Rohr) kann geerdet sein.

Eine Batterie kann zur Bereitstellung einer Betriebsspannung (zur Versorgung des Messelektrode bzw. der Auswerteelektrode) vorgesehen sein.

Die Elektroden können zumindest abschnittsweise und/oder anteilig aus einem geerdeten Material, bevorzugt Gold oder Platin, gefertigt sein oder mit diesem beschichtet sein und/oder aus einem elektrisch leitendem Polymer gefertigt sein und/oder aus einer elektrisch leitenden Keramik gefertigt sein und/oder aus Kohlenstoffnanoröhren gefertigt sein.

Weitere Ausführungsformen ergeben sich aus den Unteransprüchen.

Nachfolgend wird die Erfindung auch hinsichtlich weiterer Merkmale und Vorteile anhand eines Ausführungsbeispiels beschrieben, das anhand der folgenden Figuren näher erläutert wird.

### Hierbei zeigen:

- Figur 1: eine schematische Darstellung einer Messvorrichtung zur Messung einer Fließgeschwindigkeit eines elektrisch leitfähigen Mediums;
- Figur 2: ein Signal-Zeit-Diagramm.

In der nachfolgenden Beschreibung werden für gleiche und gleichwirkende Teile dieselben Bezugszeichen verwendet.

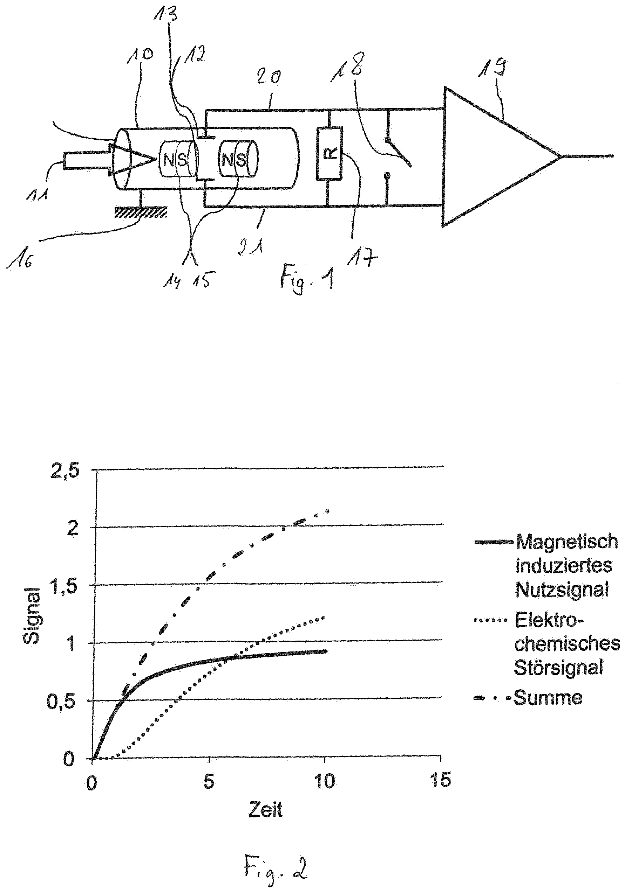

Figur 1 zeigt in schematischer Darstellung eine Ausführungsform der Messvorrichtung zur Messung der Fließgeschwindigkeit.

Innerhalb einer Rohrleitung 10 fließt ein elektrisch leitfähiges Medium, dessen Durchflussrichtung mit dem Pfeil 11 angezeigt ist. Weiterhin befinden sich innerhalb des Messrohrs 10 eine erste Elektrode 12 sowie eine zweite Elektrode 13, die sich gegenüberliegen. Eine gedachte Verbindungslinie zwischen den Elektroden ist senkrecht zur Durchflussrichtung gemäß dem Pfeil 11. Weiterhin befinden sich innerhalb des Messrohrs ein erster Magnet 14 sowie ein zweiter Magnet 15. Eine gedachte Verbindungslinie zwischen den Magneten 14, 15 ist parallel zur Durchflussrichtung gemäß dem Pfeil 11. Die Rohrleitung 10 ist mit einer Erde 16 verbunden und somit geerdet. Die Elektroden 12, 13 sind über einen Widerstand 17 miteinander verbunden. Weiterhin sind die Elektroden 12, 13 über einen Schalter 18, der parallel zum Widerstand 17 geschaltet ist, verbunden.

Mit dem Bezugszeichen 19 ist ein Verstärker gekennzeichnet, der ein Messsignal der Elektroden 12, 13 verstärkt.

Die Messung des Messsignals der Elektroden 12, 13 (der Messspannung der Elektroden 12, 13) erfolgt parallel zum Widerstand 17. Weiterhin sind die Eingänge des Verstärkers 19 zu dem Schalter 18 parallel geschaltet.

Die Elektroden 12, 13 sind mit dem innerhalb des in der Rohrleitung 10 fließenden Mediums in Kontakt. Bei fließendem Medium kommt es hierdurch zur Ladungstrennung und Anlagerung von positiven Teilchen bzw. negativen Teilchen an den Oberflächen der Elektroden 12, 13. Die Elektroden 12, 13 sind über Zuleitungen 20, 21 mit dem Widerstand 17, dem Schalter 18 sowie den Eingängen des Verstärkers 19 verbunden.

Der Schalter 18 kann durch eine (nicht gezeigt) Ansteuereinheit und einen Timer geschaltet werden. Die Ansteuereinheit kann auch eine (ebenfalls nicht gezeigte) Auswertungseinheit ansteuern.

Figur 2 zeigt einen typischen Verlauf eines magnetisch induzierten Nutzsignals, eines elektro-chemischen Störsignals sowie die Summe der beiden Signale.

Wie erkennbar ist, dauert es einige Zeit, bis sich die magnetisch induzierte Nutzspannung und die elektrochemische Steuerspannung wieder vollständig eingestellt haben, nachdem der Kurzschluss zwischen den Elektroden (zum Zeitpunkt t=0) durch Öffnen des Schalters wieder aufgehoben wurde. Die Zeit für die elektrochemischen Vorgänge ist dabei im Wesentlichen von der Reaktionskinetik an den Elektroden abhängig. Wenn nun signifikante Unterschiede im dynamischen Verhalten zwischen beiden Vorgängen vorliegen (beispielsweise eine Spannung baut sich später auf als die andere), kann mit einer (optional vorgesehenen) geeigneten Messschaltung (beispielsweise einer getriggerten Sample-and-Hold-Schaltung) nur der Anteil der induzierten Spannung gemessen werden.

### Bezugszeichenliste

- 10: Rohrleitung
- 11: Pfeil
- 12: erste Elektrode
- 13: zweite Elektrode
- 14: erster Magnet
- 15: zweiter Magnet
- 16: Erde
- 17: Widerstand
- 18: Schalter
- 19: Verstärker
- 20: erste Zuleitung
- 21: zweite Zuleitung

## Patentansprüche

1. Messvorrichtung zur Messung einer Fließgeschwindigkeit eines elektrisch leitfähigen Mediums in einem von einem Magnetfeld durchsetzten Volumen, umfassend
- eine Einrichtung (14, 15) zur Erzeugung des Magnetfeldes, wobei die Einrichtung (14, 15) mindestens einen Permanentmagneten (14, 15) zur Erzeugung des Magnetfeldes aufweist,
- mindestens einen elektrischen Widerstand (17),
- zumindest zwei Elektroden (12, 13), wobei die zumindest zwei Elektroden (12, 13) über den mindestens einen elektrischen Widerstand (17) elektrisch verbunden sind, wobei der elektrischen Widerstand (17) eine erste elektrische Verbindung darstellt,
- einen Schalter (18) zur Bereitstellung einer zweiten elektrischen Verbindung zum Kurzschluss der zumindest zwei Elektroden (12, 13), wobei die zweite elektrische Verbindung zusätzlich und parallel zur ersten elektrischen Verbindung des mindestens einen elektrischen Widerstandes (17) ausgebildet ist, und
- eine Auswertungseinheit zur Auswertung eines parallel zu dem mindestens einen Widerstand (17) gemessenen Messsignals der Elektroden (12, 13) und Berechnung der Fließgeschwindigkeit.

2. Messvorrichtung nach einem der vorherigen Ansprüche, wobei der Widerstand (17) einen Wert von 10 bis 200 kOhm, vorzugsweise 40 bis 60 kOhm, weiter vorzugsweise (ca.) 50 kOhm aufweist und/oder wobei der Schalter (18) im geöffneten Zustand einen Widerstand von zumindest 10 GOhm, vorzugweise zumindest 100 GOhm aufweist, wobei der Schalter im eingeschalteten Zustand einen Widerstand von höchstens 1 Ohm, vorzugsweise höchstens 0,1 Ohm und besonders bevorzugt höchstens 10 mOhm aufweist.

3. Messvorrichtung nach einem der vorangehenden Ansprüche, wobei die Auswerteeinheit einen Timer umfasst zur Steuerung von Offen- und Kurzschlusszeiten des Schalters,
vorzugsweise wobei der Timer derart ausgebildet ist, dass er den Schalter (18) für einen ersten Zeitraum kurzschließt und dann für einen zweiten Zeitraum zum Messen öffnet,
weiter vorzugsweise wobei der erste Zeitraum zum Kurzschließen 40 bis 200 ms, vorzugsweise 60 bis 100 ms, weiter vorzugsweise (ca.) 80 ms umfasst und der zweite Zeitraum vorzugsweise 1 bis 40 ms, weiter vorzugsweise 10 bis 30 ms, noch weiter vorzugsweise (ca.) 20 ms umfasst.

4. Messvorrichtung nach einem der vorherigen Ansprüche, wobei die Auswerteeinheit eine Aufnahmeeinrichtung aufweist, die den zeitlichen Verlauf des Messsignals aufzeichnet und/oder die Auswerteeinheit eine geeignete Messschaltung umfasst, bevorzugt eine getriggerte Sample-and-Hold-Schaltung, die vorzugsweise selektiv den Anteil der vom Durchfluss induzierten Spannung erfasst.

5. Messvorrichtung nach einem der vorangehenden Ansprüche wobei die Bestimmung der Fließgeschwindigkeit durch die Auswerteeinheit darauf basiert, dass sich die zeitlichen Verläufe der vom Durchfluss induzierten Spannung und der elektrochemischen Störspannung unterscheiden.

6. Messvorrichtung nach einem der vorherigen Ansprüche, wobei eine das Medium leitende Leitung (Rohr) geerdet ist und/oder eine Batterie zur Bereitstellung einer Betriebsspannung aufweist.

7. Messvorrichtung nach einem der vorherigen Ansprüche, wobei die Elektroden (12, 13) zumindest abschnittsweise und/oder zumindest anteilig aus einem inerten Material, bevorzugt Gold oder Platin, gefertigt sind oder mit diesem beschichtet sind und/oder aus einem elektrisch leitenden Polymer gefertigt sind und/oder aus einer elektrisch leitenden Keramik gefertigt sind und/oder aus Kohlenstoffnanoröhren gefertigt sind.

8. Messverfahren zur Messung einer Fließgeschwindigkeit eines elektrisch leitfähigen Mediums in einem von einem Magnetfeld durchsetzten Volumen, insbesondere unter Verwendung der Messvorrichtung nach einem der vorangehenden Ansprüche, umfassend die Schritte:
- Erzeugung eines Magnetfeldes durch einen oder mehrere Permanentmagnet(e) (14, 15),
- Bereitstellung von mindestens zwei Elektroden (12, 13), die permanent über mindestens einen Widerstand (17) elektrisch verbunden werden, und die zumindest zwei Elektroden (12, 13) zusätzlich und parallel zur permanenten Verbindung des Widerstands mit einem Schalter (18) verbunden sind, der dazu ausgebildet ist, die Elektroden (12, 13) kurzzuschließen,
- Messung eines Messsignals parallel zu dem mindestens einen elektrischen Widerstand (17) und
- Auswertung des gemessenen Messsignals zur Bestimmung der Fließgeschwindigkeit.

9. Messverfahren nach Anspruch 8, wobei die zumindest zwei Elektroden (12, 13) in direktem Kontakt mit dem elektrisch leitfähigen Medium sind.

10. Messverfahren nach einem der Ansprüche 8 oder 9, wobei die Offen- und Kurzschlusszeiten des Schalters (18) gesteuert werden,
wobei vorzugsweise der Schalter (18) für einen ersten Zeitraum kurzgeschlossen wird und dann für einen zweiten Zeitraum zum Messen geöffnet wird,
wobei weiter vorzugsweise der erste Zeitraum 40 bis 200 ms, vorzugsweise 60 bis 100 ms, weiter vorzugsweise (ca.) 80 ms umfasst und der zweite Zeitraum vorzugsweise 1 bis 40 ms, weiter vorzugsweise 10 bis 30 ms, noch weiter vorzugsweise (ca.) 20 ms umfasst.

11. Messverfahren nach einem der Ansprüche 8 bis 10, wobei der zeitliche Verlauf des Messsignals aufgezeichnet wird und/oder dass die Bestimmung der Fließgeschwindigkeit darauf basiert, dass sich die zeitlichen Verläufe der vom Durchfluss induzierten Spannung und der elektrochemischen Störspannung unterscheiden.

## Claims

1. Measuring device for measuring a flow velocity of an electrically conductive medium in a volume penetrated by a magnetic field, comprising
- a device (14, 15) for generating the magnetic field, the device (14, 15) comprising at least one permanent magnet (14, 15) for generating the magnetic field,
- at least one electrical resistor (17),
- at least two electrodes (12, 13), wherein the at least two electrodes (12, 13) are electrically connected via the at least one electrical resistor (17), wherein the electrical resistor (17) constitutes a first electrical connection,
- a switch (18) for providing a second electrical connection for short-circuiting the at least two electrodes (12, 13), wherein the second electrical connection is formed in addition to and in parallel with the first electrical connection of the at least one electrical resistor (17), and
- an evaluation unit for evaluating a measurement signal of the electrodes (12, 13) measured in parallel with the at least one resistor (17) and calculating the flow velocity.

2. Measuring device according to one of the preceding claims, wherein the resistor (17) comprises a value of 10 to 200 kOhm, preferably 40 to 60 kOhm, further preferably (approx.) 50 kOhm and/or wherein the switch (18) in the open state comprises a resistance of at least 10 GOhm, preferably at least 100 GOhm, wherein the switch in the switched-on state comprises a resistance of at most 1 Ohm, preferably at most 0.1 Ohm and particularly preferably at most 10 mOhm.

3. Measuring device according to any of the preceding claims, wherein the evaluation unit comprises a timer for controlling open and short-circuit times of the switch, preferably wherein the timer is configured to short-circuit the switch (18) for a first time period and then open it for a second time period for measuring,
further preferably wherein the first time period for short-circuiting comprises 40 to 200 ms, preferably 60 to 100 ms, further preferably (about) 80 ms, and the second time period preferably comprises 1 to 40 ms, further preferably 10 to 30 ms, still further preferably (about) 20 ms.

4. A measuring device according to any one of the preceding claims, wherein the evaluation unit comprises a recording device which records the temporal course of the measuring signal and/or the evaluation unit comprises a suitable measuring circuit, preferably a triggered sample-and-hold circuit, which preferably selectively detects the component of the voltage induced by the flow.

5. Measuring device according to one of the preceding claims, wherein the determination of the flow velocity by the evaluation unit is based on the fact that the temporal courses of the voltage induced by the flow and the electrochemical interference voltage differ.

6. A measuring device according to any one of the preceding claims, wherein a conduit (pipe) conducting the medium is earthed and/or comprises a battery for providing an operating voltage.

7. Measuring device according to one of the previous claims, wherein the electrodes (12, 13) are made at least in sections and/or at least in part of an inert material, preferably gold or platinum, or are coated therewith and/or are made of an electrically conductive polymer and/or are made of an electrically conductive ceramic and/or are made of carbon nanotubes.

8. Measuring method for measuring a flow velocity of an electrically conductive medium in a volume penetrated by a magnetic field, in particular using the measuring device according to one of the preceding claims, comprising the steps:
- Generation of a magnetic field by one or more permanent magnet(s) (14, 15),
- Provision of at least two electrodes (12, 13) which are permanently electrically connected via at least one resistor (17), and the at least two electrodes (12, 13) are additionally and in parallel with the permanent connection of the resistor connected to a switch (18) which is designed to short-circuit the electrodes (12, 13),
- measurement of a measurement signal in parallel with the at least one electrical resistor (17) and
- Evaluation of the measured measurement signal to determine the flow velocity.

9. The measuring method according to claim 8, wherein the at least two electrodes (12, 13) are in direct contact with the electrically conductive medium.

10. A measuring method according to any one of claims 8 or 9, wherein the open and short-circuit times of the switch (18) are controlled,
wherein preferably the switch (18) is short-circuited for a first time period and then opened for a second time period for measuring,
wherein further preferably the first time period comprises 40 to 200 ms, preferably 60 to 100 ms, more preferably (about) 80 ms, and the second time period preferably comprises 1 to 40 ms, more preferably 10 to 30 ms, still more preferably (about) 20 ms.

11. Measurement method according to any one of claims 8 to 10, wherein the temporal course of the measurement signal is recorded and/or that the determination of the flow velocity is based on the fact that the temporal courses of the voltage induced by the flow and the electrochemical interference voltage differ.

## Revendications

1. Dispositif de mesure pour mesurer une vitesse d'écoulement d'un milieu électriquement conducteur dans un volume traversé par un champ magnétique, comprenant
- un appareil (14, 15) pour générer le champ magnétique, l'appareil (14, 15) comprenant au moins un aimant permanent (14, 15) pour générer le champ magnétique,
- au moins une résistance électrique (17),
- au moins deux électrodes (12, 13), lesdites au moins deux électrodes (12, 13) étant reliées électriquement par l'intermédiaire de ladite au moins une résistance électrique (17), la résistance électrique (17) constituant une première connexion électrique,
- un commutateur (18) pour fournir une deuxième connexion électrique afin de court-circuiter lesdites au moins deux électrodes (12, 13), la deuxième connexion électrique étant formée en plus de la première connexion électrique, et en parallèle à celle-ci, de ladite au moins une résistance électrique (17), et
- une unité d'évaluation pour évaluer un signal de mesure des électrodes (12, 13) qui est mesuré parallèlement à ladite au moins une résistance (17) et pour calculer la vitesse d'écoulement.

2. Dispositif de mesure selon l'une des revendications précédentes, dans lequel la résistance (17) a une valeur de 10 à 200 kOhm, de préférence de 40 à 60 kOhm, de façon encore préférée (environ) 50 kOhm et/ou dans lequel le commutateur (18) a une résistance d'au moins 10 GOhm, de préférence d'au moins 100 GOhm à l'état ouvert, dans lequel le commutateur a une résistance d'au plus 1 Ohm, de préférence d'au plus 0,1 Ohm et de façon particulièrement préférée d'au plus 10 mOhm à l'état de contact.

3. Dispositif de mesure selon l'une des revendications précédentes, dans lequel l'unité d'évaluation comprend une minuterie pour contrôler les temps d'ouverture et de court-circuit du commutateur,
dans lequel de préférence la minuterie est conçue de telle sorte qu'elle court-circuite le commutateur (18) pendant une première période de temps et l'ouvre ensuite pendant une deuxième période de temps pour la mesure,
dans lequel, de façon encore préférée, la première période de temps de court-circuit va de 40 à 200 ms, de préférence de 60 à 100 ms, de façon encore préférée (environ) est de 80 ms, et la deuxième période de temps va de préférence de 1 à 40 ms, de façon encore préférée de 10 à 30 ms, de façon encore préférée est (environ) de 20 ms.

4. Dispositif de mesure selon l'une des revendications précédentes, dans lequel l'unité d'évaluation comprend un dispositif d'enregistrement qui enregistre l'évolution dans le temps du signal de mesure et/ou l'unité d'évaluation comprend un circuit de mesure approprié, de préférence un circuit d'échantillonnage et de maintien déclenché, qui enregistre de préférence de manière sélective une proportion de la tension induite par l'écoulement.

5. Dispositif de mesure selon l'une des revendications précédentes, dans lequel l'évaluation de la vitesse d'écoulement par l'unité d'évaluation est basée sur le fait que les évolutions dans le temps de la tension induite par l'écoulement et de la tension d'interférence électrochimique diffèrent.

6. Dispositif de mesure selon l'une des revendications précédentes, dans lequel une conduite (tuyau) conduisant le milieu est mise à la terre et/ou possède une batterie pour fournir une tension de fonctionnement.

7. Dispositif de mesure selon l'une des revendications précédentes, dans lequel les électrodes (12, 13) sont au moins partiellement et/ou au moins proportionnellement constituées d'un matériau inerte, de préférence de l'or ou du platine, ou sont revêtues de celui-ci et/ou sont constituées d'un polymère conducteur d'électricité et/ou sont constituées d'une céramique conductrice d'électricité et/ou sont constituées de nanotubes de carbone.

8. Procédé de mesure pour mesurer une vitesse d'écoulement d'un milieu électriquement conducteur dans un volume traversé par un champ magnétique, en particulier en utilisant le dispositif de mesure selon l'une des revendications précédentes, comprenant les étapes consistant à
- générer un champ magnétique au moyen d'un ou de plusieurs aimants permanents (14, 15),
- prévoir au moins deux électrodes (12, 13), qui sont connectées électriquement en permanence par l'intermédiaire d'au moins une résistance (17), et lesdites au moins deux électrodes (12, 13) sont, en plus et en parallèle à la connexion permanente de la résistance, reliées à un commutateur (18), qui est conçu pour court-circuiter les électrodes (12, 13),
- mesurer un signal de mesure en parallèle avec ladite au moins une résistance électrique (17) et
- évaluer le signal de mesure afin de déterminer la vitesse d'écoulement.

9. Procédé de mesure selon la revendication 8, dans lequel lesdites au moins deux électrodes (12, 13) sont en contact direct avec le milieu électriquement conducteur.

10. Procédé de mesure selon l'une des revendications 8 ou 9, dans lequel les temps d'ouverture et de court-circuit du commutateur (18) sont contrôlés,
dans lequel, de préférence, le commutateur (18) est en position de court-circuit pendant une première période de temps, puis est ouvert pendant une deuxième période de temps pour la mesure,
dans lequel, de façon préférée, la première période de temps va de 40 à 200 ms, de préférence de 60 à 100 ms, de façon encore préférée est (environ) de 80 ms, et la deuxième période de temps va de préférence de 1 à 40 ms, de façon encore préférée, de 10 à 30 ms, et, de façon la plus préférée, est (environ) de 20 ms.

11. Procédé de mesure selon l'une des revendications 8 à 10, dans lequel l'évolution au cours du temps du signal de mesure est enregistrée et/ou l'évaluation de la vitesse d'écoulement est basée sur le fait que les évolutions au cours du temps de la tension induite par l'écoulement et de la tension d'interférence électrochimique diffèrent.
